# EUROPEAN PATENT SPECIFICATION

(11) **EP 0 551 059 B1**
(45) Date of publication and mention of the grant of the patent: **16.04.1997**
(21) Application number: 92830660.4
(22) Date of filing: 09.12.1992
(51) Int. Cl.: F16K 1/00, F16K 47/02

(54) **Cartridge for ceramic discs for mixing cocks**
Kartusche für keramische Mischventilscheiben
Cartouche avec plaquettes en céramique pour un robinet-mitigeur

(30) Priority: 09.12.1991 IT MI911070 U
(43) Date of publication of application: 14.07.1993
(73) Proprietor: Soldi, Liborio, I-28010 Alzo (Novara) (IT)
(72) Inventor: Soldi, Liborio, I-28010 Alzo (Novara) (IT)
(74) Representative: Cicogna, Franco

(56) References cited:
- EP-A- 0 042 523
- WO-A-90/03533
- DE-A- 2 753 264
- DE-C- 3 428 286
- FR-A- 2 480 397
- GB-A- 2 186 641

## Description

### BACKGROUND OF THE INVENTION

The present invention relates to a cartridge with ceramics discs for use in mixing cocks,faucets and the like, comprising a sealing element of the anti-hammering type.

As is known,ceramics cartridges and discs for use in mixing cocks and the like conventionally comprise gaskets arranged at the outer face of the fixed ceramics disc,which gaskets seal the cold water and warm water inlet ducts.

One problem involved with the above mentioned gaskets is that,for providing a good sealing,it is necessary to use comparatively soft rubber gaskets which however,being provided with a poor mechanical strength,are urged,as a water hammering occurs,to penetrate between the bottom of the cartridge and the ceramics disc.

This drawback is very deleterious for the sealing and moreover it causes the pressure between the ceramics discs to greatly increase,which negatively affects the proper operation of the cocks.

Another drawback of prior ceramics disc cartridges is that of the noise generated by the water flow through the body of the cartridge,as water passes between the ceramics discs.

A prior art solution is shown in GB-A-2 186 641 which discloses a cartridge according to the preamble of claim 1. Said device needs two different tubular sleaves abutting on a circular middle flange of an inner gasket.

Other prior solutions to the above mentioned problems, on the other hand,have not been found satisfactory, since they involved a comparatively great construction complexity.

### SUMMARY OF THE INVENTION

Accordingly,the aim of the present invention is to solve the above mentioned problems,by providing a cartridge with an anti-hammering sealing element which provides a proper sealing without causing the gasket to be displaced from its seat.

Within the scope of the above mentioned aim, a main object of the present invention is to provide a ceramic disc cartridge for cocks and the like which is very silent and reliable in operation.

Another object of the present invention is to provide such a sealing element which is so designed as to greatly reduce the pressing force between the ceramics discs of the cartridge,so as to correspondingly reduce the operating effort to be applied to the cock operating lever.

According to one aspect of the present invention, the above mentioned aim and objects,as well as yet other objects,which will become more apparent hereinafter,are achieved by the invention as disclosed in the main claim.

### BRIEF DESCRIPTION OF THE DRAWINGS

Further characteristics and advantages of the present invention will become more apparent hereinafter from the following detailed description of a preferred,though not exclusive,embodiment thereof,which is illustrated,by way of an indicative but not limitative example,in the accompanying drawings,where:

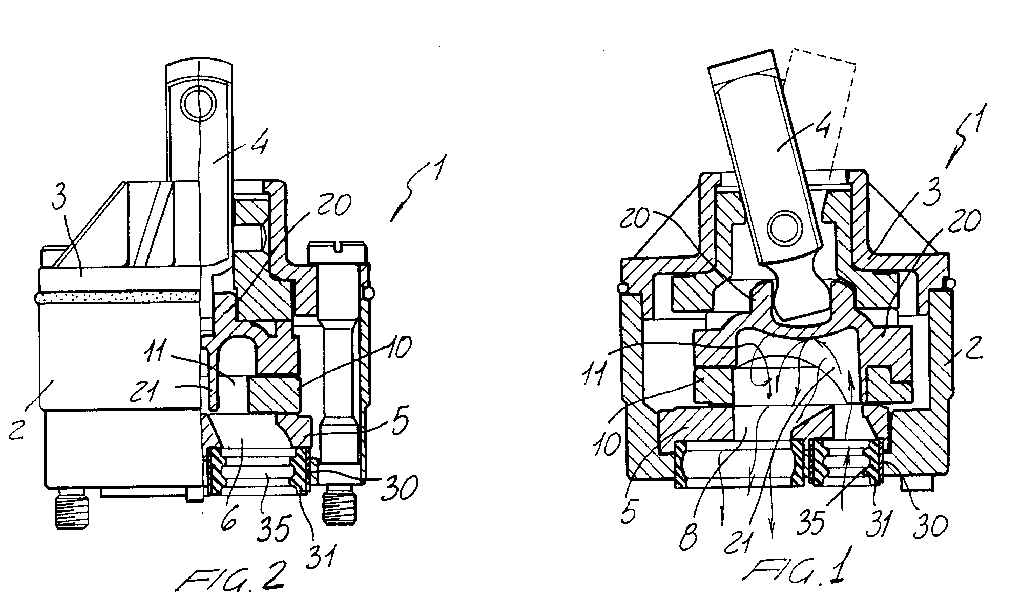

figure 1 is a cross-sectional view illustrating a ceramics disc cartridge including the sealing element according to the present invention;

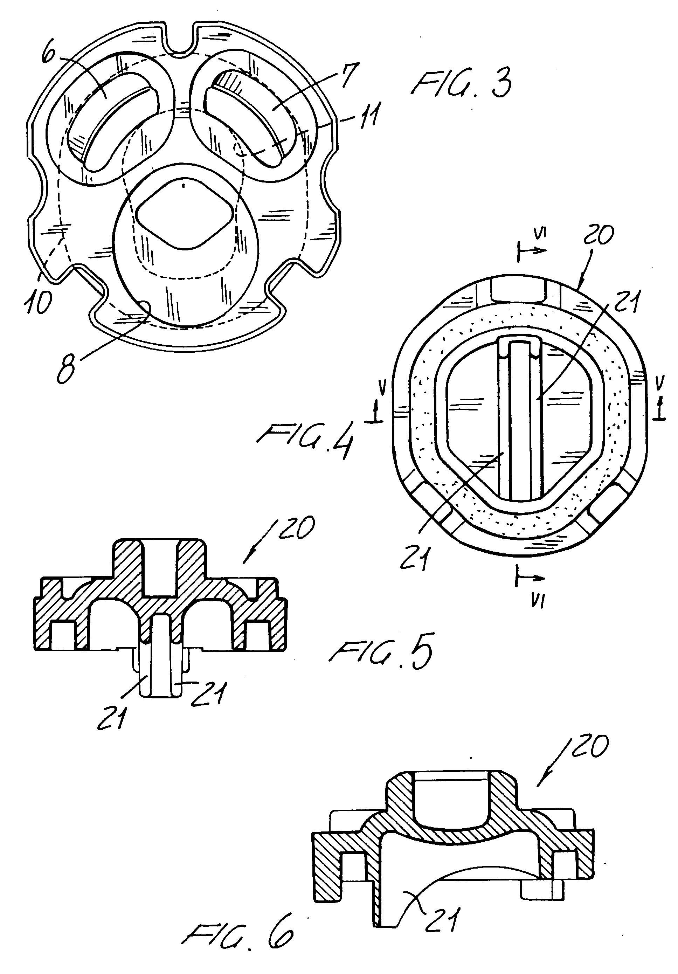

figure 2 is a partial cross-sectional view of the cartridge;
figure 3 illustrates the mutual arrangement of the ceramics discs;

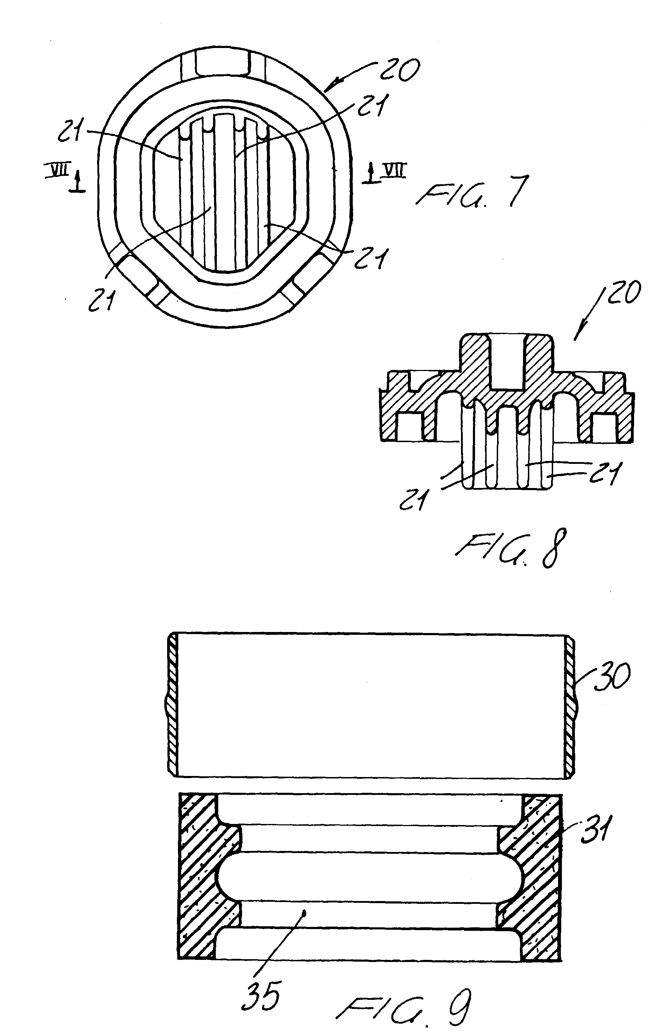

figure 4 illustrates,shown from the bottom face thereof,the operating body for driving the movable ceramics disc,with the silencing fins;
figure 5 is a cross-sectional view taken along the line V-V of figure 4;
figure 6 illustrates a cross-sectional view taken along the line VI-VI of figure 4;
figure 7 illustrates another embodiment of the operating or driving body with an increased number of silencing fins;
figure 8 illustrates a cross-sectional view taken along the line VII-VII of figure 7;
   and
figure 9 is a cross-sectional exploded view of the sealing element.

### DESCRIPTION OF THE PREFERRED EMBODIMENT

With reference to the figures of the accompanying drawings,a ceramics discs cartridge,for mixing cocks and the like,according to the present invention, which has been generally indicated at the reference number 1,comprises a box-like body 2, which is closed at the top thereof by a closing cap 3,operating as a holding and articulation element for the operating lever driving the cartridge.

Inside the cartridge there is arranged a fixed ceramics disc 5,which is provided with ports 6 and 7 for the inlet of hot water and cold water,as well as an outlet port 8 coupled to the delivery cock.

Slidably with respect to the fixed ceramics disc 5 there is provided a movable ceramics disc 10, provided with an operating or driving opening or port 11 which,in a known manner,can be translated and rotated so as to engage,either partially or fully, the ports 6 and 7 and to adjust,accordingly,the delivery and mixing of water.

The movable ceramics disc is held by a driving body 20,which comprises silencing fins,indicated at 21,which can be two,three or four and which, in addition to engaging with the port or opening 11, also operate to convey and separate the fluid threads, thereby providing a noisless operation for the cock.

In fact,the provision of the silencing fins 21 generates a sectorial division of the water flow, thereby preventing localized turbulences susceptible to generate noise.

An important aspect of the present invention is that at the hot water and cold water inlet ports 6 and 7 there is provided a sealing element preventing the gasket,as a water hammering occurs,from threading between the bottom of the body of the cartridge 2 and the fixed ceramics disc.

In order to achieve the above mentioned object, there has been provided a protecting tubular portion 30,of a comparatively rigid material,which is housed within the ports 6 and 7 and which,in turn,houses a gasket 31 in its inside,said gasket being made of a rubber having a comparatively small stiffness,preferably a Shore hardness of 40-50.

The use of a comparatively soft rubber reduces the compression forces between the movable ceramics disc and,accordingly,the effort to be applied on the cock driving lever,in order to perform the opening and closing operations,as well as the mixing operation,by the single drive lever.

Moreover, annular ribs,indicated at 35 are provided on the inner surfaces of said gaskets, which ribs allow to further increase the sealing in addition to assuring a proper location of the gasket,even in a water hammering condition.

From the above disclosure it should be apparent that the invention fully achieves the intended aim and objects.

In particular,the fact is to be pointed out that the provision of a comparatively rigid protection element is such as to prevent the gasket from being displaced,without the need of using,for said gasket,a rigid rubber material which would increase the effort for driving the cartridge.

In practicing the invention,the used materials, though the best results have been obtained by using the above mentioned materials,as well as the contingent shape and size,can be any according to requirements.

## Claims

1. A ceramics disc cartridge for mixing cocks comprising a driving body (20) for driving a cartridge movable disc (10), slidingly and rotatably associated with a fixed disc (5) in the inside of said cartridge and an anti-hammering sealing element (30,31) located at at least the hot or cold water inlet port of the fixed disc, characterized in that said anti-hammering sealing element comprises, at least some hot water and cold water inlet ports (6, 7) of said fixed disc (5), a single protection tubular portion (30), made of a comparatively rigid plastic material, housing in its inside a gasket (31) made of a material having a comparatively small stiffness.

2. A cartridge according to Claim 1, characterized in that said gasket (31) of a comparatively small stiffness material is made of a rubber having a Shore hardness of 40-50.

3. A cartridge according to the preceding claims, characterized in that said sealing element comprises, on the inner surface of said gasket, a plurality of annular ribs (35).

4. A cartridge according to the preceding claims characterized in that the driving body (20) comprises a plurality of silencing fins (21) arranged in regard with and extending into an opening of the movable ceramics disc (10).

5. A cartridge according to Claim 4, characterized in that said driving body (20) of said cartridge comprises two silencing fins (21).

6. A cartridge according to claim 4, characterized in that said driving body (20) of said cartridge comprises three silencing fins (21).

7. A cartridge according to claim 4, characterized in that said driving body (20) of said cartridge comprises four silencing fins (21).

## Patentansprüche

1. Ein keramischer Scheibeneinsatz für Mischhähne, umfassend einen antreibenden Körper (20), um eine bewegliche Scheibe (10) eines Einsatzes zu betätigen, die gleitend und drehbar mit einer unbeweglichen Scheibe (5) im Inneren dieses Einsatzes und mit einem schlagmindernden Dichtungsteil (30, 31) in Verbindung steht, das zumindest am Einlaß des heißen oder kalten Wassers der unbeweglichen Scheibe angebracht ist, dadurch gekennzeichnet, daß dieses schlagmindernde Dichtungsteil mindestens einige Einlaßöffnungen (6, 7) für das von dieser unbeweglichen Scheibe (5) kommende heiße und kalte Wasser umfaßt sowie ein einzelnes röhrenförmiges Schutzteil (30), das aus einem vergleichsweise steifen Kunststoff besteht und in seinem Inneren eine Dichtung (31) enthält, die aus einem Material mit einer vergleichsweise geringen Steifigkeit besteht.

2. Ein Einsatz nach Anspruch 1, dadurch gekennzeichnet, daß diese Dichtung (31) aus einem Material mit einer vergleichsweise geringen Steifigkeit aus Gummi besteht, das eine Härte von 40-50 auf der Shore-Skala besitzt.

3. Ein Einsatz nach den vorstehenden Ansprüchen, dadurch gekennzeichnet, daß dieses Dichtungsteil auf der inneren Oberfläche dieser Dichtung eine Vielzahl ringförmiger Rippen (35) umfaßt.

4. Ein Einsatz nach den vorstehenden Ansprüchen, dadurch gekennzeichnet, daß der antreibende Körper (20) eine Vielzahl von Schalldämpfungsrippen (21) umfaßt, die einer Öffnung der beweglichen keramischen Scheibe (10) gegenüberliegen und sich dort hinein erstrecken.

5. Ein Einsatz nach Anspruch 4, dadurch gekennzeichnet, daß dieser antreibende Körper (20) dieses Einsatzes zwei Schalldämpfungsrippen (21) umfaßt.

6. Ein Einsatz nach Anspruch 4, dadurch gekennzeichnet, daß dieser antreibende Körper (20) dieses Einsatzes drei Schalldämpfungsrippen (21) umfaßt.

7. Ein Einsatz nach Anspruch 4, dadurch gekennzeichnet, daß dieser antreibende Körper (20) dieses Einsatzes vier Schalldämpfungsrippen (21) umfaßt.

## Revendications

1. Un insert céramique en forme de disque pour robinets mélangeurs, comprenant un corps menant (20) pour entraîner un insert mobile en forme de disque (10) associé, de manière à pouvoir glisser et tourner, à un disque fixe (5) à l'intérieur dudit insert et à un élément d'étanchéité (30, 31) éliminant les coups de bélier situé au moins à l'entrée de l'eau chaude ou de l'eau froide du disque fixe, caractérisé en ce que ledit élément d'étanchéité éliminant les coups de bélier comprend au moins quelques entrées pour l'eau chaude et pour l'eau froide (6, 7) provenant dudit disque fixe (5), un seul segment tubulaire de protection (30) fait d'une matière plastique relativement rigide, qui contient à son intérieur un joint d'étanchéité (31) fait à partir d'un matériau de rigidité relativement basse.

2. Un insert selon la revendication 1, caractérisé en ce que ledit joint (31) fait d'un matériau de rigidité relativement basse est réalisé en caoutchouc avec une dureté Shore de 40 à 50.

3. Un insert selon les revendications précédentes, caractérisé en ce que ledit élément d'étanchéité comprend une multiplicité d'arêtes annulaires (35) sur la surface interne dudit joint.

4. Un insert selon les revendications précédentes, caractérisé en ce que ledit corps menant (20) comprend une multiplicité d'ailettes (21) amortissant les bruits arrangées en face d'une ouverture du disque mobile céramique et s'étendant dans son intérieur.

5. Un insert selon la revendication 4, caractérisé en ce que ledit corps menant (20) dudit insert comprend deux ailettes (21) amortissant les bruits.

6. Un insert selon la revendication 4, caractérisé en ce que ledit corps menant (20) dudit insert comprend trois ailettes (21) amortissant les bruits.

7. Un insert selon la revendication 4, caractérisé en ce que ledit corps menant (20) dudit insert comprend quatre ailettes (21) amortissant les bruits.
